# EUROPÄISCHE PATENTSCHRIFT

(11) **EP 3 756 433 B1**
(45) Veröffentlichungstag und Bekanntmachung des Hinweises auf die Patenterteilung: **04.05.2022**
(21) Anmeldenummer: 20161817.0
(22) Anmeldetag: 09.03.2020
(51) Int. Cl.: A01B 59/00, A01B 63/02, A01B 69/00, A01B 69/04

(54) **SYSTEM ZUR KONTROLLE EINES MIT EINEM FAHRZEUG VERBUNDENEN ARBEITSGERÄTS**
SYSTEM FOR CONTROLLING A WORKING IMPLEMENT CONNECTED TO A VEHICLE
SYSTÈME DE COMMANDE D'UN OUTIL DE TRAVAIL RACCORDÉ À UN VÉHICULE

(30) Priorität: 15.03.2019 DE 102019203539
(43) Veröffentlichungstag der Anmeldung: 30.12.2020
(73) Patentinhaber: Deere & Company, Moline, IL 61265 (US)
(72) Erfinder: Kremmer, Martin, 68163 Mannheim (DE); Schaefer, Tobias, 68163 Mannheim (DE)
(74) Vertreter: Holst, Sönke

(56) Entgegenhaltungen:
- EP-A1- 3 289 847
- EP-A2- 1 243 171
- DE-A1-102015 221 120
- US-A1- 2006 237 200
- US-A1- 2019 059 199

## Beschreibung

Die vorliegende Erfindung bezieht sich auf ein System zur Kontrolle eines mit einem Fahrzeug verbundenen Arbeitsgeräts, wobei das Arbeitsgerät wenigstens ein Werkzeug zur Durchführung eines pflanzenbaulichen Arbeitsvorgangs aufweist, das Fahrzeug mit einer selbsttätigen Lenkeinrichtung zur Führung des Fahrzeugs auf einem Fahrzeugsollweg ausgestattet ist, ein Aktor zur Kontrolle der seitlichen Position des Arbeitsgeräts gegenüber dem Fahrzeug mit einer Gerätesteuereinheit verbunden ist, die betreibbar ist, den Aktor derart anzusteuern, dass das Arbeitsgerät auf einem Arbeitsgerätesollweg bewegt wird und die Gerätesteuereinheit eingerichtet ist, eine durch äußere Einwirkungen verursachte, seitliche Abweichung des Fahrzeugs vom Fahrzeugsollweg durch eine Ansteuerung des Aktors zu kompensieren, sowie auf eine Kombination aus einem Fahrzeug mit einem Arbeitsgerät und einem derartigen System.

### Stand der Technik

Eine Anzahl landwirtschaftlicher Vorgänge erfordert, dass ein Arbeitsgerät entlang eines gewünschten Weges geführt wird, sodass der vom Arbeitsgerät ausführte Arbeitsvorgang an einem gewünschten Ort vorgenommen wird. Ein derartiger Ort kann eine Stelle sein, wo ein Saatgutteilchen zu säen ist (mit einer Einzelkorn- oder Drillmaschine) oder wo eine auf einem Feld wachsende Pflanze zu düngen ist (mit einem Düngerstreuer oder einer Feldspritze) oder wo Unkraut zu hacken ist (mit einem Kultivator) oder gespritzt werden soll (mit einer Feldspritze). Üblicherweise werden derartige Arbeitsgeräte mit einem Fahrzeug über das Feld bewegt. Das Fahrzeug und/oder das Arbeitsgerät kann mit einem Ortsbestimmungssystem, wie einem Empfänger für ein globales Navigationssatellitensystem (GNSS) und/oder einer Kamera mit einem Bildverarbeitungssystem ausgestattet sein, welches Merkmale auf einem Feld erkennt, insbesondere Pflanzenreihen.

Für Anwendungen, bei denen eine relativ hohe Genauigkeit erforderlich ist, wie beispielsweise zum Hacken zur Entfernung von Unkraut von einem Feld, ohne die Pflanzen zu beschädigen, wurde es vorgeschlagen, das Fahrzeug auf einem gewünschten Weg (basierend auf einer Kamera oder einem GNSS-Empfänger) zu lenken und einen zur seitlichen Verstellung des Geräts vorgesehenen Aktor gegenüber dem Fahrzeug (ebenfalls basierend auf einer Kamera oder einem GNSS-Empfänger) zu kontrollieren, um das Arbeitsgerät auf dem gewünschten Weg zu halten (EP 2283719 A2, US 2013/0110358 A1, DE 1020015009889 A1) und somit mögliche Lenkfehler des Fahrzeugs zu kompensieren. US 2019/059199 und US 2006/237200 offenbaren weiteren Systeme zur Kontrolle der Stellung eines Arbeitsgeräts.

### Problem

Der Aktor kontrolliert somit die seitliche Position des Arbeitsgeräts gegenüber dem Fahrzeug, um zu erreichen, dass die Werkzeuge des Arbeitsgeräts an den gewünschten Positionen zur Durchführung des Arbeitsvorganges entlang geführt werden. Das Fahrzeug kann jedoch in manchen Fällen, bedingt durch äußere Einflüsse, nicht genau entlang eines beabsichtigten Weges geführt werden. Derartige Einflüsse können beispielsweise ein zur Seite geneigter Hang sein, der das Fahrzeug hangabwärts driften lässt, oder Ungenauigkeiten bei der Positionsbestimmung (z.B. durch einen messtechnisch oder tektonisch bedingten Versatz zwischen einer Aufzeichnung des Sollwegs und dem nachfolgenden Abfahren des aufgezeichneten Sollwegs). In beiden Fällen fährt das Fahrzeug nicht genau entlang des beabsichtigten Weges, auf welchem die Symmetrieachse des Fahrzeugs beispielsweise genau zwischen zwei Pflanzenreihen liegt. Derartige Abweichungen sind prinzipiell unproblematisch, da sie durch den Aktor ausgeglichen werden, der das Arbeitsgerät gegenüber dem Fahrzeug seitlich verstellt. In den beschriebenen Fällen ergibt sich demnach einfach ein permanenter seitlicher Versatz zwischen Fahrzeug und Arbeitsgerät.

Wenn das Fahrzeug nun jedoch am Feldende einen Wendevorgang durchführt, wird die Steuerung des Aktors beim Wiederabsenken des Arbeitsgeräts nach dem Wendevorgang den Aktor zunächst in eine Neutralstellung verbringen, wenn sie ihn nicht in der vor dem Wendevorgang eingenommenen Stellung belässt, und dann den Aktor, basierend auf den nun einlaufenden Signalen der Kamera und/oder des GNSS-Empfängers, ansteuern, um die Position des Arbeitsgeräts nachzuregeln, denn eine korrekte Einstellung des Aktors wäre aufgrund der äußeren Einflüsse, die nunmehr in die entgegen gesetzte Richtung wirken, in der Regel zur bisherigen Einstellung spiegelsymmetrisch. In beiden Fällen entsteht für eine gewisse Strecke, die u.a. aufgrund von zusätzlich auftretenden Regelschwingungen eine Länge in der Größenordnung von 10 m aufweisen kann, eine signifikante Abweichung zwischen der tatsächlichen Position des Arbeitsgeräts und der gewünschten Position. Über diese Strecke arbeitet das Arbeitsgerät somit nicht optimal und kann in ungünstigen Fällen sogar zu einer Beschädigung der Pflanzen führen.

### Lösung

Verschiedene Aspekte der vorliegenden Offenbarung werden in den Ansprüchen dargelegt.

Es wird ein System zur Kontrolle eines mit einem Fahrzeug verbundenen Arbeitsgeräts beschrieben, wobei das Arbeitsgerät wenigstens ein Werkzeug zur Durchführung eines pflanzenbaulichen Arbeitsvorgangs aufweist, das Fahrzeug mit einer selbsttätigen Lenkeinrichtung zur Führung des Fahrzeugs auf einem Fahrzeugsollweg ausgestattet ist, und ein Aktor zur Kontrolle der seitlichen Position des Arbeitsgeräts gegenüber dem Fahrzeug mit einer Gerätesteuereinheit verbunden ist, die betreibbar ist, den Aktor derart anzusteuern, dass das Arbeitsgerät auf einem Arbeitsgerätesollweg bewegt wird und die Gerätesteuereinheit eingerichtet ist, eine durch äußere Einwirkungen verursachte, seitliche Abweichung des Fahrzeugs vom Fahrzeugsollweg durch eine Ansteuerung des Aktors zu kompensieren. Die Gerätesteuereinheit ist programmiert, nach einem Wendevorgang den Aktor in eine Stellung voreinzustellen, in welcher die durch den Wendevorgang bedingte Änderung der äußeren Einwirkungen kompensiert wird.

Mit anderen Worten wird das Problem dadurch gelöst, dass man den Aktor nach dem Wendevorgang in eine Position voreinstellt, die die geänderte Auswirkung der äußeren Einflüsse kompensiert. Wenn demnach das Arbeitsgerät beispielsweise vor dem Wendevorgang durch den Aktor hangaufwärts nach links verstellt werden musste, um das hangabwärts gerichtete Driften des Fahrzeugs zu kompensieren, wird der Aktor nach dem Wendevorgang das Arbeitsgerät wieder hangaufwärts voreinstellen, nun jedoch nach rechts, denn die Hangneigung und dadurch auf das Fahrzeug ausgeübte Lateralkraft hat sich nach dem Wendevorgang gegenüber dem Fahrzeug und dem Gerät um 180° gedreht.

Analoges ergibt sich in dem Fall, dass das Fahrzeug durch einen GNSS-Empfänger nicht genau auf dem Sollweg gelenkt wird, sondern nach links oder rechts davon abweicht, sodass der Aktor das Arbeitsgerät gegenüber dem Fahrzeug nach rechts oder links verstellt. Nach der Wiederaufnahme der Arbeit nach dem Wendevorgang wird der Aktor das Arbeitsgerät durch die Gerätesteuereinheit entgegengesetzt gegenüber der Stellung vor dem Wendevorgang ansteuern, d.h. der Aktor versetzt das Arbeitsgerät nach rechts oder links gegenüber dem Fahrzeug. Die vorgeschlagene Vorgehensweise vermeidet oder reduziert demnach die bisher unmittelbar nach dem Wendevorgang auftretenden Fehler, die durch die nach dem Wendevorgang in geänderter Richtung auf das Fahrzeug und das Arbeitsgerät einwirkenden, äußeren Einflüsse bedingt werden. Unmittelbar daran anschließend wird wieder der normale Regelvorgang zur Einstellung des Aktors aufgenommen.

Die Lenkeinrichtung des Fahrzeugs kann mit einer Positionserfassungseinrichtung zur Erfassung der Position des Fahrzeugs verbunden und betreibbar sein, anhand der erfassten Position des Fahrzeugs und einer Sollweginformation das Fahrzeug auf dem Fahrzeugsollweg zu lenken.

Auch die Gerätesteuereinheit kann mit einer Positionserfassungseinrichtung zur Erfassung der Position des Arbeitsgeräts verbunden und betreibbar sin, anhand der erfassten Position des Arbeitsgeräts und einer Sollweginformation das Arbeitsgerät auf dem Arbeitsgerätesollweg zu leiten.

Die Sollweginformation für die Lenkeinrichtung und/oder die Gerätesteuereinheit kann einen abgespeicherten Weg und/oder eine gewünschte Relativposition zu einem Merkmal auf einem Feld umfassen, bei dem es sich beispielsweise um eine Pflanzenreihe handeln kann.

Die Positionserfassungseinrichtung der Lenkeinrichtung und/oder der Gerätesteuereinheit kann einen Empfänger eines Positionsbestimmungssystems und/oder eine Kamera umfassen, die zur Erkennung des Merkmals auf dem Feld dient, und/oder einen Entfernungsmesser, der ebenfalls mit einem Merkmal auf dem Feld zusammenwirken kann. Als Entfernungsmesser kommt beispielsweise eine mit Ultraschall, Radar oder mit anderen elektromagnetischen Wellen (z.B. Ultrabreitband, UWB) arbeitende Ausführungsform in Frage. Der Entfernungsmesser kann mit den Pflanzen oder anderen Merkmalen des Felds, z.B. Fahrspuren, Dämmen oder speziell angelegten Rillen o.ä. zusammenwirken.

Die Gerätesteuereinheit kann programmiert sein, den Aktor nach dem Wendevorgang in eine gegenüber der vor dem Wendevorgang eingenommenen Position bezüglich einer Symmetrieebene des Arbeitsgeräts gespiegelte Position zu verbringen.

Die Gerätesteuereinheit kann programmiert sein, die zunächst letzte Position des Aktors vor dem Wendevorgang abzuspeichern und zur Voreinstellung des Aktors nach dem Wendevorgang abzurufen oder die anzusteuernde Position des Aktors anhand einer Karte des Felds zu bestimmen. In der Karte kann die anzusteuernde Position des Aktors ortsspezifisch abgespeichert sein, oder die geltende Fahrtrichtung und die sich daraus ergebende Position des Aktors werden anhand der aktuellen Position des Arbeitsgeräts und der Karte ermittelt.

Die Gerätesteuereinheit kann programmiert sein, einen Wendevorgang selbsttätig zu erkennen. Das kann beispielsweise durch eine Identifizierung des Wendevorgangs anhand der Signale einer Trägheitsnavigationseinheit, die in einem Positionsbestimmungsempfänger integriert sein kann (s. EP 1 475 609 A2), anhand einer Lenkwinkeländerung, die einen bestimmten Winkel überschreitet, wie er üblicherweise beim Wenden, nicht aber bei der Arbeit auf einem Feld verwendet wird, oder anhand einer Kombination aus Geräteausheben, Lenkwinkel und Geschwindigkeits- und/oder Fahrtrichtungsänderung erfolgen oder durch ein von einem Vorgewendemanagement abgegebenen Signal, das auf den Wendevorgang hindeutet.

### Ausführungsbeispiel

Die erwähnten und andere Merkmale werden durch die folgende Beschreibung und beigefügten Zeichnungen erkennbar, in denen:
FIG. 1 eine schematische Draufsicht auf ein landwirtschaftliches Fahrzeug mit einem Arbeitsgerät mit im Bodeneingriff befindlichen Werkzeugen und einem System zur Steuerung der seitlichen Position des Arbeitsgeräts während eines Bearbeitungsvorgangs auf einem Feld;
FIG. 2 eine Draufsicht auf ein Fahrzeug nach dem Stand der Technik mit dem Arbeitsgerät vor und nach einem Wendevorgang bei der Arbeit an einem Seitenhang;
FIG. 3 eine Draufsicht auf ein Fahrzeug nach dem Stand der Technik mit dem Arbeitsgerät vor und nach einem Wendevorgang bei einem Arbeitsvorgang mit GNSS-basierter Lenkung bei einem Fehler des GNSS und
FIG. 4 ein Flussdiagramm zeigt, nach dem eine Gerätesteuereinheit vorgeht.

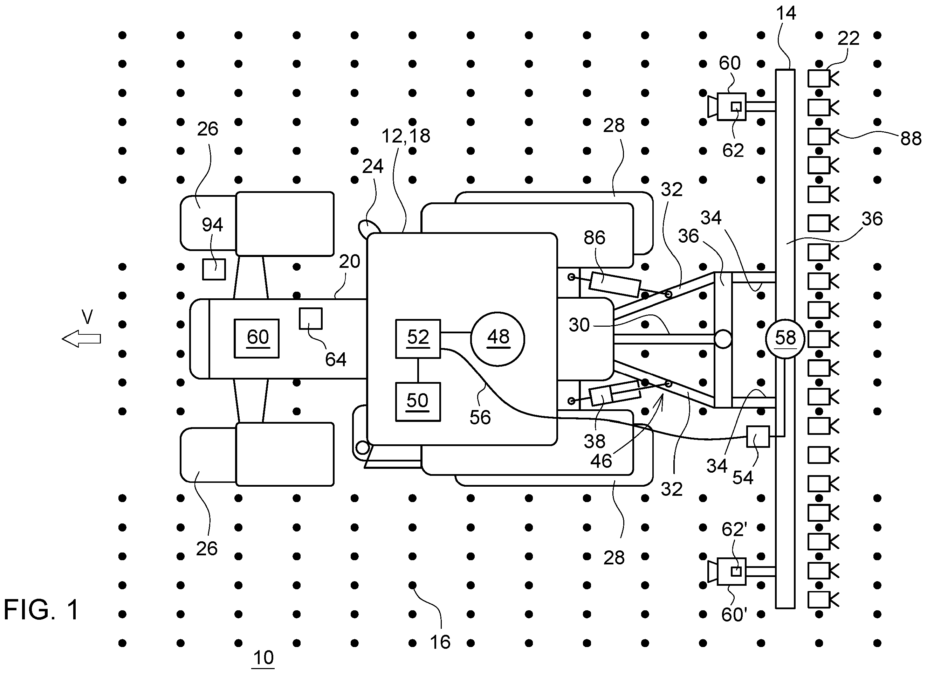

Gleiche Bezugszeichen werden verwendet, um in den Figuren durchgängig gleiche Elemente zu kennzeichnen. Wenigstens eine beispielhafte Ausführungsform des Gegenstands der vorliegenden Offenbarung ist anhand der Figuren 1 bis 4 verständlich.

Figur 1 zeigt eine Draufsicht auf ein Feld 10, auf dem in landwirtschaftliches Fahrzeug 12, das ein selbstfahrendes Fahrzeug und ein damit verbundenes Arbeitsgerät 14 umfasst, einen Arbeitsvorgang durchführt. Auf dem Feld 10 wurden während eines vorhergehenden Arbeitsschrittes Pflanzen 16 gesät oder gepflanzt. Die Pflanzen 16 sind in einem rechteckigen Muster, wie gezeigt, angebaut, oder in einem beliebigen anderen Muster, z.B. in einem hexagonalen oder Diamant-Muster, oder bedecken das Feld ohne regelmäßiges Muster, wie wenn sie mit einer Drillmaschine gesät worden sind. Die Pflanzen können auf jegliche sinnvolle Weise gesät oder gepflanzt worden sein, wie basierend auf einem Empfänger für ein Positionierungssystem (GNSS, z.B. GPS) oder unter Verwendung lokaler Sensoren auf dem Sä- oder Pflanzfahrzeug.

Das Fahrzeug 12 ist ein Traktor 18 mit einem Fahrgestell 20 oder Rahmen, das oder der auf im Bodeneingriff befindlichen Mitteln in der Form lenkbarer Vorderräder 26 und angetriebener Hinterräder 28 auf dem Erdboden abgestützt ist. Das Fahrzeug 12 umfasst zudem eine Bedienerkabine 24 und einen Motor 61 zum Antreiben der Hinterräder 28 und optional der Vorderräder 26 und einer Zapfwelle (nicht gezeigt).

Das Arbeitsgerät 14 umfasst einen Querträger 36, welcher eine Anzahl an Reiheneinheiten 22 abstützt, die seitlich nebeneinander über die Länge des Querträgers 36 verteilt sind. Die Reiheneinheiten 22 umfassen Werkzeuge 88 (z.B. Hacken oder Gänsefußschare zum Entfernen von Unkraut vom Boden des Feldes zwischen den Reihen der Pflanzen 16 oder beliebige andere Werkzeuge zur Durchführung eines pflanzenbaulichen Arbeitsvorgangs, wie Säen, Düngen, Spritzen, Ernten etc.).

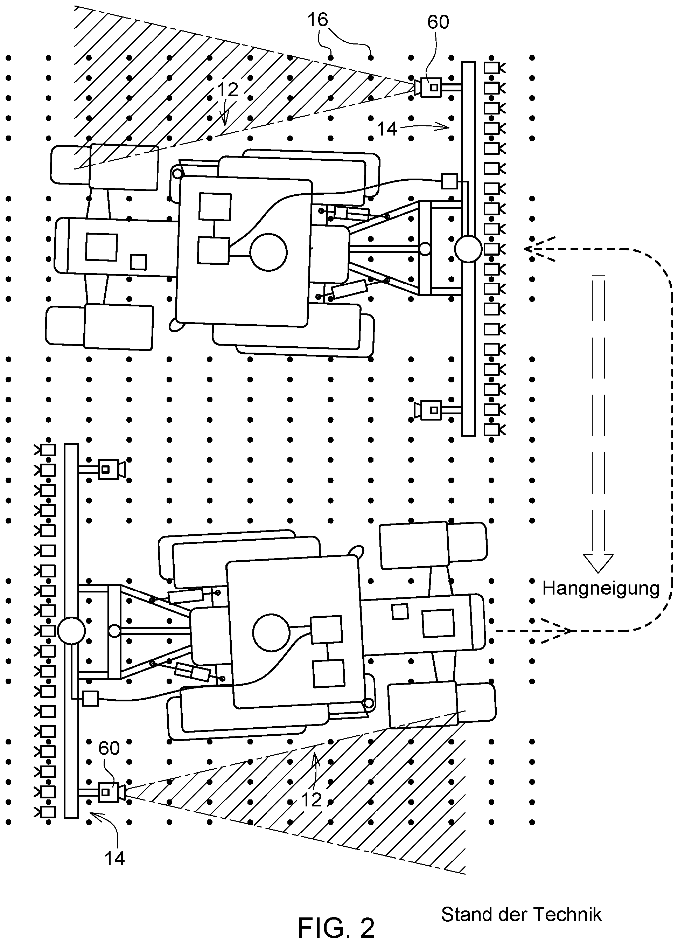

An der Rückseite des Fahrgestells 20 ist eine Dreipunktkupplung 46 mit Unterlenkern 32 und einem Oberlenker 30 befestigt. Die Lenker 30, 32 sind mit ihren rückwärtigen Enden an einem quer verlaufenden Trägerbalken 35 befestigt, der seinerseits durch sich längs erstreckende Träger 34 am Querträger 36 des Arbeitsgeräts 14 angebracht ist. Die Lenker 30 und 32 sind jeweils um vertikale Achsen schwenkbar am Fahrgestell 20 und am Trägerbalken 35 angebracht. Ein Aktor 38 in der Form eines hydraulischen Zylinders ist mit seinem ersten Ende am Fahrgestell 20 und mit seinem zweiten Ende an einem der Unterlenker 32 angelenkt und kann somit den Trägerbalken 35 und somit das gesamte Arbeitsgerät 14 parallelogrammartig in seitlicher Richtung, d.h. horizontal und quer zur Vorwärtsrichtung V, bewegen. Der Aktor 38 wird durch einen Ventilblock 50 kontrolliert, der mit einer elektronischen Fahrzeugsteuereinheit 52 verbunden ist. Die elektronische Fahrzeugsteuereinheit 52 ist eingerichtet, über ein Bussystem 56 (das vorzugweise nach der Norm ISO 11783 arbeitet Kontrollsignale zu erhalten, welches Kontrollanweisungen von einer elektronischen Gerätesteuereinheit 54 an die Fahrzeugsteuereinheit 52 übersendet. Die Gerätesteuereinheit 54 kann somit die seitliche Position des Arbeitsgeräts 14 kontrollieren, wie im Detail in der DE 102016212201 A1 beschrieben wird, wie auch mit Bezug auf die Figur 2 näher erläutert wird. Ein Sensor 86 erfasst den Winkel eines der Unterlenker 32 gegenüber dem Fahrgestell 20 um die vertikale Achse und stellt somit ein Signal hinsichtlich der seitlichen Position des Arbeitsgeräts 14 gegenüber dem Fahrgestell 20 bereit. Es sei angemerkt, dass der Sensor 86 in das Gehäuse des Aktors 38 integriert werden könnte (s. EP 1210854 A1). Bei einer anderen Ausführungsform könnten Aktoren 38 zwischen dem Fahrgestell 20 und jedem Unterlenker 32 verwendet werden, mit integrierten oder getrennten Sensoren 86, wobei die Aktoren 38 einfach oder doppelt wirkend sind.

Bei einer anderen möglichen Ausführungsform kann das Arbeitsgerät 14 durch einen so genannten Seitenverschieberahmen mit dem Fahrzeug 12 verbunden sein, der einen Aktor zur seitlichen Positionskontrolle des Arbeitsgeräts 14 verwendet, wie z.B. in EP 2283719 A2 und US 2013/0110358 A1 beschrieben.

Es wäre auch möglich, das Arbeitsgerät 14 auf Rädern abzustützen und es durch eine Deichsel mit einer Kupplung des Fahrzeugs 12 zu verbinden und durch einen Aktor 38 aktiv den Winkel der Deichsel und/oder den Lenkwinkel der Räder des Arbeitsgeräts 14 zu kontrollieren (s. US 2013/0186657 A1).

Somit wird die seitliche Position des Arbeitsgeräts 14 durch die Gerätesteuereinheit 54 kontrolliert, unter Verwendung des Aktors 38. Da das Arbeitsgerät 14 immer in einer seitlichen Position über das Feld 10 bewegt werden sollte, an der die Reiheneinheiten 22 mit den im Bodeneingriff befindlichen Werkzeugen 88 an ihren geeigneten Positionen zwischen den Reihen der Pflanzen 16 angeordnet sind, um den gewünschten landwirtschaftlichen Arbeitsvorgang durchzuführen und Schäden an den Pflanzen zu vermeiden (oder in einer beliebigen, sinnvollen gewünschten Position zur Durchführung eines landwirtschaftlichen Arbeitsvorgangs, wie Säen, Pflanzen, Ernähren, oder Ernten der Pflanzen 16 oder Teilen davon), wird das Arbeitsgerät 14 durch die Gerätesteuereinheit 54 selbsttätig entlang der Reihen der Pflanzen 16 geführt, basierend auf Signalen einer ersten Kamera 60 mit einem Bildverarbeitungssystem 62, einer optionalen zweiten Kamera 60' mit einem Bildverarbeitungssystem 62' und einem optionalen Empfänger 58 zum Empfang eines Satelliten-basierten Positionsbestimmungssystems, wie GPS, Glonass, oder Galileo. Der Empfänger 58 ist am Querträger 36 des Arbeitsgeräts 12 oder an einer anderen, geeigneten Stelle dort befestigt. Die Bildverarbeitungssysteme 62, 62' könnten auch in die Gerätesteuereinheit 54 integriert werden. Bei einer anderen Ausführungsform könnte die Gerätesteuereinheit 54 auch in die Fahrzeugsteuereinheit 52 integriert werden, oder sie kann den Aktor 38 direkt (nicht über die Fahrzeugsteuereinheit 52) ansteuern.

Die Kameras 60, 60' sind am Querträger 36 des Arbeitsgeräts 14 befestigt und blicken auf das Feld 10 vor dem Arbeitsgerät 14. Die Bildverarbeitungssysteme 62, 62' extrahieren aus den Bildern die relative Position der Reihen der Pflanzen 16 gegenüber der Kamera 60, 60' und vergleichen diese Position mit einer im Vorab abgespeicherten oder programmierten, gewünschten Sollposition der Pflanzen 16 gegenüber der Kamera 60, 60' oder umgekehrt. Somit wird der Gerätesteuereinheit 54 ein erstes Signal bereitgestellt, das eine mögliche Abweichung zwischen der aktuellen seitlichen Position und der gewünschten seitlichen Position des Arbeitsgeräts 14 anzeigt. Die Signale der Bildverarbeitungssysteme 62, 62' können durch Signale des Empfängers 58 verbessert oder (insbesondere, wenn die Reiheneinheiten 22 Säeinheiten mit Furchenöffnern mit im Bodeneingriff befindlichen Werkzeugen 88 sind) ersetzt werden, unter Verwendung einer im Vorab abgespeicherten Karte mit der aktuellen oder gewünschten Position der Pflanzen 16 (oder von deren Reihen) als Referenz. Das Fusionieren der Signale der Bildverarbeitungssysteme 62, 62' und des Empfängers 58 kann auf der relativen Qualität der Signale basieren.

Demnach kontrolliert die Gerätesteuereinheit 54 den Aktor 38, um das Arbeitsgerät 14 mit seinen Reiheneinheiten 22 basierend auf dem ersten Signal entlang eines gewünschten Wegs zu führen. Bei der gezeigten Ausführungsform wird dieser gewünschte Weg durch die Position der Pflanzen 16 auf dem Feld vorgegeben und der Aktor 38 wird durch die Gerätesteuereinheit 54 (unter Verwendung geeigneter Software) basierend auf den Signalen der Kamera 60 und optional 60' derart gelenkt, dass die Reiheneinheiten 22 sich zwischen den Pflanzen 16 (entsprechend der von den Kameras 60, 60' detektierten Position der Pflanzen 16) bewegen. Der gewünschte Weg kann alternativ oder zusätzlich in einem Speicher der Gerätesteuereinheit 54 im Vorab abgespeichert sein und der Aktor 38 basierend auf dem gewünschten Weg kontrolliert werden. Beide Optionen und ihre Kombination sind im Wesentlichen in der US 2002/0193928 A1 beschrieben. Z

Eine Ausführungsform einer seitlichen Führung des Arbeitsgeräts 14 basierend auf Kameras 60, 60' und einem Empfänger 58 wird zudem detaillierter in EP 2910098 A1 beschrieben.

Die Vorderräder 26 des Fahrzeugs 12 werden in der Weise selbsttätig gelenkt, dass die Fahrzeugsteuereinheit 52 einen Lenkaktor 64 kontrolliert, der den Lenkwinkel der Vorderräder 26 basierend auf Signalen eines Positionsbestimmungssystems mit einem Empfänger 48 zum Empfang von Signalen eines Satelliten-basierten Positionsbestimmungssystems, wie GPS, Glonass, oder Galileo, unter Verwendung einer im Vorab abgespeicherten Karte, die Daten hinsichtlich der Orte der Pflanzen 16 oder eines Wegs (Fahrgasse) zur Überfahrung des Felds als Referenz verwendet, wobei ein Lenkwinkelsensor 94 Rückkopplungswerte bereitstellen kann. Der Empfänger 48, der optional ein Trägheitsnavigationssystem, wie in EP 1475609 A2 beschrieben, umfassen kann, ist auf dem Dach der Kabine 24 befestigt. Alternativ oder zusätzlich kann das Fahrzeug 12 basierend auf einer Kamera (nicht gezeigt) gelenkt werden, die am Fahrzeug 12 befestigt und mit einem Bildverarbeitungssystem verbunden ist, das die Reihen der Pflanzen 16 vor dem Fahrzeug 12 erfasst. Es sei auch angemerkt, dass im Falle eines auf Raupenlaufwerken basierenden Fahrzeugs 12 dessen Lenkwinkel durch Geschwindigkeitsdifferenzen der Raupenlaufwerke auf beiden Seiten des Fahrzeugs 12 beeinflusst werden könnte, und dass im Falle einer Knicklenkung ein Aktor den Lenkwinkel des Fahrzeugs 12 durch ein Drehen des vorderen und rückwärtigen Teils des Fahrzeugs 12 um eine vertikale Verbindungsachse kontrollieren würde.

Die Figur 2 zeigt ein Fahrzeug 12 mit einem Arbeitsgerät 14 bei der Arbeit an einem Seitenhang, der sich in der Figur 2 nach unten neigt. Das selbsttätig gelenkte Fahrzeug 12 driftet mit seiner Symmetrieachse gegenüber der Mitte der Pflanzenreihen 16 aufgrund der Hangneigung nach unten, d.h. gegenüber der Fahrtrichtung nach rechts ab. Das Arbeitsgerät 14 wird durch den Aktor 38 somit, wenn das Fahrzeug 12 nach rechts fährt, nach links (hangaufwärts) und wenn das Fahrzeug 12 nach links fährt, nach rechts (ebenfalls hangaufwärts) verstellt.

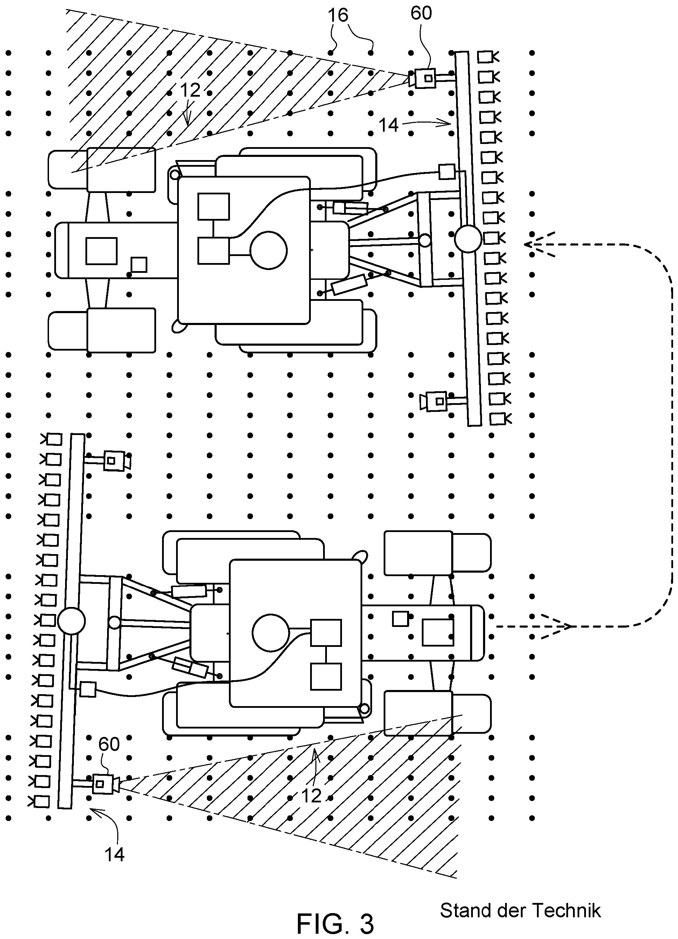

Analog zeigt die Figur 3 ein anhand der Signale des Empfängers 48 selbsttätig gelenktes Fahrzeug 12 mit einem Arbeitsgerät 14 bei der Arbeit in der Ebene, wobei jedoch ein seitlicher Versatz zwischen dem abgespeicherten Sollweg, basierend auf welchem das Fahrzeug 12 gelenkt wird, und der tatsächlichen Position der Pflanzenreihen 16 auftritt. Dieser Versatz kann durch unterschiedliche Genauigkeiten oder unterschiedliche Empfangsbedingungen der beim Säen und bei dem Vorgang der Figur 3 verwendeten Empfänger 48 verursacht sein, oder durch eine tektonische Verschiebung des Felds 10 zwischen dem Sävorgang und der Bearbeitung. Das Fahrzeug 12 fährt in der Figur 3 mit seiner Symmetrieachse in einer gegenüber der Mitte der Pflanzenreihen 16 nach unten hin versetzten Position, was der Aktor 38 durch Verschiebung des Arbeitsgeräts 14 nach oben hin ausgleicht. Im unteren Teil der Figur 3 zieht der Aktor 38 das Arbeitsgerät 14 demnach nach links und im oberen Teil nach rechts.

Demnach hängt die Stellung des Aktors 38 in den beiden, in den Figuren 2 und 3 dargestellten Situationen von äußeren Einwirkungen ab, nämlich vom Seitenhang in Figur 2 und von dem durch den Empfänger 48 bedingten Versatz in Figur 3. Diese Einwirkungen führen bei einer Änderung der Fahrtrichtung des Fahrzeugs 12 nach einem Wendevorgang zu den gezeigten, geänderten Einstellungen des Aktors 38. Im Stand der Technik erfolgt die Berücksichtigung der besagten Einwirkungen durch die Kamera 60, welche den Aktor 38 derart ansteuert, dass das Arbeitsgerät 14 in der gewünschten Stellung relativ zu den Reihen der Pflanzen 16 geführt wird. Nach einem Wendevorgang, wie er in den Figuren 2 und 3 durch die Pfeile angedeutet wird, würde das Arbeitsgerät 14 jedoch zunächst in der Stellung bleiben, die es vor dem Wendevorgang hätte, was dazu führt, dass es zunächst in einer Stellung ist, in welcher es keine sinnvolle Arbeit auf dem Feld verrichtet oder gar die Pflanzen beschädigt.

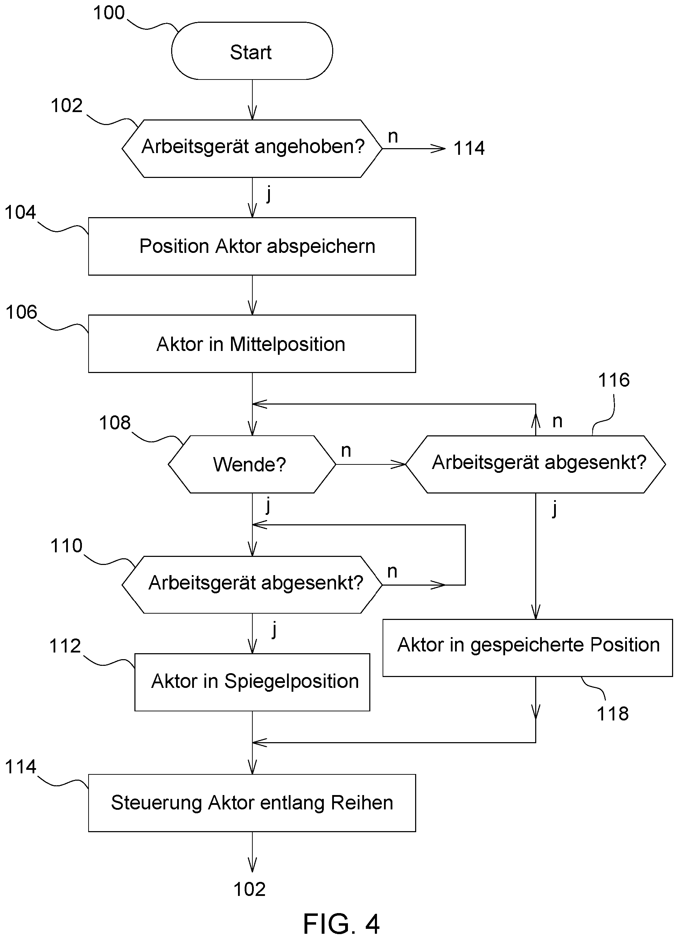

Zur Reduzierung oder Vermeidung dieses Problem arbeitet die Gerätesteuereinheit 54 nach dem Flussdiagramm der Figur 4. Nach dem Start im Schritt 100 wird zunächst abgefragt, ob das Arbeitsgerät 14 ausgehoben ist, wozu über das Bussystem 56 der Status eines längenverstellbaren Oberlenkers 30 oder die Hubhöhe der Dreipunktkupplung (z.B. eines Krafthebers zum Anheben eines oder beider der Unterlenker 32) abgefragt oder Signale der Kamera 60, 60' oder der Empfänger 48, 58 zurückgegriffen werden kann. Ist das Arbeitsgerät 14 nicht ausgehoben, erfolgt der Schritt 114, in welchem der Aktor 38 in der oben beschriebenen Weise angesteuert wird, um das Arbeitsgerät 14 entlang des gewünschten Weges über das Feld 10 zu führen.

Ist das Arbeitsgerät 14 jedoch angehoben, folgt der Schritt 104, in dem die derzeitige Position des Aktors 38 abgespeichert wird. Im folgenden Schritt 106 kommandiert die Gerätesteuereinheit 54 den Aktor 38 in eine Mittel- oder Neutralstellung zu gehen, in der sich die Symmetrieachse (Längsmittelachse) des Arbeitsgeräts 14 mit der Symmetrieachse (Längsmittelachse) des Fahrzeugs 12 überdeckt, d.h. das Arbeitsgerät 14 ist mit dem Fahrzeug 12 seitlich ausgerichtet. In der ausgehobenen Stellung befindet sich das Arbeitsgerät 14 demnach stets in der Mittel- oder Neutralposition. Es folgt der Schritt 108, in dem abgefragt wird, ob gerade ein Wendevorgang erfolgt. Dieser kann anhand der Signale der Kamera 60, 60' oder der Empfänger 48, 58 oder der darin angeordneten Trägheitsnavigationssensoren oder anhand des über das Bussystem 56 an die Gerätesteuereinheit 54 übertragene Lenksignal des Fahrzeugs 12 oder anhand einer Kombination aus dem sensierten Ausheben des Arbeitsgerätes 14, dem Lenkwinkel des Fahrzeugs 12 und der Geschwindigkeits- und/oder Fahrtrichtungsänderung des Fahrzeugs 12 (vgl. hierzu DE 10 2014 202 181 A1) erkannt werden.

Wird im Schritt 108 festgestellt, dass kein Wendevorgang erfolgt, folgt der Schritt 116, in dem abgefragt wird, ob das Arbeitsgerät abgesenkt ist und anderenfalls der Schritt 110. Ist im Schritt 116 das Arbeitsgerät nicht abgesenkt, folgt wieder der Schritt 108 und anderenfalls der Schritt 118, in dem das Arbeitsgerät 14 in die im Schritt 104 abgespeicherte Position verbracht wird. Hier wird es somit ermöglicht, das Arbeitsgerät 14 temporär anzuheben, wo der Aktor 38 es in die Neutralposition verbringt und wieder abzusenken, z.B. um es über Hindernisse wegzuheben oder Fehlerbeseitigungs- oder Einstellarbeiten oder eine visuelle Inspektion am Arbeitsgerät 14 durchzuführen.

Im Schritt 110 wird abgefragt, ob das Arbeitsgerät 14 abgesenkt ist. Ist das nicht der Fall, folgt wieder der Schritt 110. Anderenfalls folgt der Schritt 112, in dem der Aktor 38 durch die Gerätesteuereinheit 54 kommandiert wird, in eine zur im Schritt 104 abgespeicherten Position symmetrische (Spiegel-) Position überzugehen. Die in den Figuren 2 und 3 gezeigten Positionswechsel des Aktors 38 werden im Schritt 112 somit selbsttätig vollzogen, basierend auf der Erkennung des Wendevorgangs im Schritt 108. Ist das nicht der Fall, folgt wieder der Schritt 112 und sonst der Schritt 114, auf den wieder der Schritt 102 folgt.

Durch die beschriebene Vorgehensweise erfolgt demnach eine Vorsteuerung des Aktors 38 nach dem Wendevorgang, welche den sich aufgrund des Wendens ändernden Einfluss der äußeren Einwirkung (Hangneigung, GNSS-Fehler, etc.) selbsttätig ausgleicht.

Es sei noch angemerkt, dass man im Schritt 104 im Falle einer auf dem Empfänger 58 basierenden Ansteuerung des Aktors 38 die Position des Empfängers 58 und/oder den zugehörigen Zeitpunkt abspeichern, d.h. in eine Karte eintragen oder in einer vorgeplanten Fahrspur eintragen kann. Im Schritt 110 muss man nicht auf die im Schritt 104 abgespeicherte Position des Aktors 38 zurückgreifen, sondern kann den Aktor 38 basierend auf abgespeicherten Daten für die nach dem Wendevorgang anzusteuernde Position ansteuern, die beispielsweise bei einem anderen Arbeitsvorgang auf dem Feld 10 gewonnen wurden, z.B. beim vorjährigen Arbeitsvorgang, oder man verwendet hierfür beliebige andere Informationen, die auf die Lage und/oder Fahrtrichtung der neuen Fahrspur nach dem Wendevorgang schließen lassen. Man kann auch im Vorab eine Planung des auf dem Feld abzufahrenden Weges durchführen und beim Abfahren des Weges anhand einer Karte des Weges die anzusteuernde Auslenkung des Aktors 38 ableiten, sei es indirekt anhand der Fahrtrichtung oder direkt durch eine Eintragung der Auslenkung des Aktors 38 in der Karte.

Bei einer anderen Ausführungsform werden die Schritte der Figur 4 durch ein Vorgewendemanagement des Fahrzeugs 12 kontrolliert, das einerseits den Lenkaktor 64 und andererseits das Ausheben und Absenken des Arbeitsgeräts 14 im Vorgewende selbsttätig veranlasst und zudem die beschriebene Voreinstellung des Aktors 38 nach dem Wendevorgang bewerkstelligt.

Die Kamera 60, 60' kann durch einen (z.B. mit Ultraschall, Radar oder anderen elektromagnetischen Wellen arbeitenden) Entfernungsmesser ersetzt oder ergänzt werden, der ebenfalls mit einem Merkmal auf dem Feld zusammenwirken kann, z.B. Fahrspuren, Dämmen oder speziell angelegten Rillen o.ä.

Schließlich sei noch angemerkt, dass der Wendevorgang nicht unbedingt in der Weise erfolgen muss, dass zeitlich aufeinander folgende Überfahrten des Felds 10 direkt nebeneinander liegen, sondern es können auch eine oder mehrere Spuren zunächst ausgelassen und später überfahren werden. Dadurch ändert sich die vorgeschlagene Vorgehensweise nicht.

Schritte der Figur 4
100 Start
102 Arbeitsgerät angehoben?
104 Position Aktor abspeichern
106 Aktor in Mittellstellung
108 Wende?
110 Arbeitsgerät abgesenkt?
112 Aktor in Spiegelposition
114 Steuerung Aktor entlang Reihen
116 Arbeitsgerät abgesenkt?
118 Aktor in gespeicherte Position

## Patentansprüche

1. System zur Kontrolle eines mit einem Fahrzeug (12) verbundenen Arbeitsgeräts (14), wobei:
das Arbeitsgerät (14) wenigstens ein Werkzeug (88) zur Durchführung eines pflanzenbaulichen Arbeitsvorgangs aufweist,
das Fahrzeug (12) mit einer selbsttätigen Lenkeinrichtung zur Führung des Fahrzeugs (12) auf einem Fahrzeugsollweg ausgestattet ist,
ein Aktor (38) zur Kontrolle der seitlichen Position des Arbeitsgeräts (14) gegenüber dem Fahrzeug (12) mit einer Gerätesteuereinheit (54) verbunden ist, die betreibbar ist, den Aktor (38) derart anzusteuern, dass das Arbeitsgerät (12) auf einem Arbeitsgerätesollweg bewegt wird und die Gerätesteuereinheit (54) eingerichtet ist, eine durch äußere Einwirkungen verursachte, seitliche Abweichung des Fahrzeugs (12) vom Fahrzeugsollweg durch eine Ansteuerung des Aktors (38) zu kompensieren,
**dadurch gekennzeichnet, dass** die Gerätesteuereinheit (54) programmiert ist, nach einem Wendevorgang den Aktor (38) in eine Stellung voreinzustellen, in welcher die durch den Wendevorgang bedingte Änderung der äußeren Einwirkungen kompensiert wird.

2. System nach Anspruch 1, wobei die Lenkeinrichtung des Fahrzeugs (12) mit einer Positionserfassungseinrichtung zur Erfassung der Position des Fahrzeugs verbunden und betreibbar ist, anhand der erfassten Position des Fahrzeugs (12) und einer Sollweginformation das Fahrzeug (12) auf dem Fahrzeugsollweg zu lenken.

3. System nach Anspruch 1 oder 2, wobei die Gerätesteuereinheit (54) mit einer Positionserfassungseinrichtung zur Erfassung der Position des Arbeitsgeräts (14) verbunden und betreibbar ist, anhand der erfassten Position des Arbeitsgeräts (14) und einer Sollweginformation das Arbeitsgerät (14) auf dem Arbeitsgerätesollweg zu leiten.

4. System nach Anspruch 2 oder 3, wobei die Sollweginformation einen abgespeicherten Weg und/oder eine gewünschte Relativposition zu einem Merkmal auf einem Feld umfasst.

5. System nach Anspruch 4, wobei das Merkmal auf dem Feld eine Pflanzenreihe ist.

6. System nach einem der Ansprüche 2 bis 5, wobei die Positionserfassungseinrichtung einen Empfänger (48, 58) eines Positionsbestimmungssystems und/oder eine Kamera (60, 60') und/oder einen Entfernungsmesser umfasst.

7. System nach einem der Ansprüche 1 bis 6, wobei die Gerätesteuereinheit (54) programmiert ist, den Aktor (38) nach dem Wendevorgang in eine gegenüber der vor dem Wendevorgang eingenommenen Position bezüglich einer Symmetrieebene des Arbeitsgeräts (14) gespiegelte Position zu verbringen.

8. System nach einem der vorhergehenden Ansprüche, wobei die Gerätesteuereinheit (54) programmiert ist, die Position des Aktors (38) vor dem Wendevorgang abzuspeichern und zur Voreinstellung des Aktors (38) nach dem Wendevorgang abzurufen oder die Position des Aktors (38) anhand einer Karte des Felds (10) zu bestimmen.

9. System nach einem der vorhergehenden Ansprüche, wobei die Gerätesteuereinheit (54) programmiert ist, einen Wendevorgang selbsttätig zu erkennen.

10. Kombination aus einem Fahrzeug (12), einem Arbeitsgerät (14) und einem System nach einem der vorhergehenden Ansprüche.

## Claims

1. System for controlling a working implement (14) connected to a vehicle (12), wherein:
the working implement (14) comprises at least one tool (88) for carrying out an agricultural operation,
the vehicle (12) is equipped with an automatic steering device for guiding the vehicle (12) on an intended vehicle path,
an actuator (38) for controlling the lateral position of the working implement (14) relative to the vehicle (12) is connected to an implement control unit (54) that can be operated to control the actuator (38) in such a way that the working implement (12) is moved on an intended path of the working implement and the implement control unit (54) is set up to compensate a lateral deviation of the vehicle (12) from the intended path of the vehicle caused by external influences by controlling the actuator (38),
**characterized in that** the implement control unit (54) is programmed to pre-set the actuator (38) after a turning operation in a position in which the change of the external influences caused by the turning operation is compensated.

2. System according to Claim 1, wherein the steering device of the vehicle (12) is connected to a position detection device for detecting the position of the vehicle and can be operated to steer the vehicle (12) on the intended path of the vehicle on the basis of the detected position of the vehicle (12) and the intended path information.

3. System according to Claim 1 or 2, wherein the implement control unit (54) is connected to a position detection device for detecting the position of the working implement (14) and can be operated to guide the working implement (14) on the intended path of the working implement on the basis of the detected position of the working implement (14) and the intended path information.

4. System according to Claim 2 or 3, wherein the intended path information includes a stored path and/or an intended position relative to a feature on a field.

5. System according to Claim 4, wherein the feature on the field is a row of plants.

6. System according to any one of Claims 2 to 5, wherein the position detection device includes a receiver (48, 58) of a positioning system and/or a camera (60, 60') and/or a rangefinder.

7. System according to any one of Claims 1 to 6, wherein the implement control unit (54) is programmed to bring the actuator (38) into a position after the turning operation that is mirrored in relation to a plane of symmetry of the working implement (14) relative to the position adopted before the turning operation.

8. System according to any one of the preceding claims, wherein the implement control unit (54) is programmed to store the position of the actuator (38) before the turning operation and to call up or determine the position of the actuator (38) on the basis of a map of the field (10) to preset the actuator (38) after the turning operation.

9. System according to any one of the preceding claims, wherein the implement control unit (54) is programmed to automatically detect a turning operation.

10. Combination of a vehicle (12), a working implement (14) and a system according to any one of the preceding claims.

## Revendications

1. Système de contrôle d'un outillage (14) raccordé à un véhicule (12), dans lequel :
l'outillage (14) présente au moins un outil (88) permettant d'effectuer une opération de travail de production végétale,
le véhicule (12) est équipé d'un dispositif de direction automatique permettant de conduire le véhicule (12) sur un trajet théorique de véhicule,
un actionneur (38) permettant de contrôler la position latérale de l'outillage (14) par rapport au véhicule (12) est relié à une unité de commande d'outillage (54) qui peut fonctionner pour piloter l'actionneur (38) de telle sorte que l'outillage (12) soit déplacé sur un trajet théorique d'outillage, et l'unité de commande d'outillage (54) est conçue pour compenser par un pilotage de l'actionneur (38) un écart latéral du véhicule (12) par rapport au trajet théorique de véhicule, provoqué par des facteurs extérieurs,
**caractérisé en ce que** l'unité de commande d'outillage (54) est programmée pour prérégler l'actionneur (38) après un demi-tour dans une position dans laquelle la variation des facteurs extérieurs, due au demi-tour, est compensée.

2. Système selon la revendication 1, dans lequel le dispositif de direction du véhicule (12) est relié à un dispositif de détection de position permettant de détecter la position du véhicule et peut être exploité par celui-ci afin de diriger le véhicule (12) sur le trajet théorique de véhicule à l'aide de la position détectée du véhicule (12) et d'une information de trajet théorique.

3. Système selon la revendication 1 ou 2, dans lequel l'unité de commande d'outillage (54) est reliée à un dispositif de détection de position permettant de détecter la position de l'outillage (14) et peut être exploitée par celui-ci afin de guider l'outil de travail (14) sur le trajet théorique de travail à l'aide de la position détectée de l'outillage (14) et d'une information de trajet théorique.

4. Système selon la revendication 2 ou 3, dans lequel l'information de trajet théorique comprend un trajet mémorisé et/ou une position relative souhaitée par rapport à un repère sur un champ.

5. Système selon la revendication 4, dans lequel le repère sur le champ est une rangée de plantes.

6. Système selon l'une quelconque des revendications 2 à 5, dans lequel le dispositif de détection de position comprend un récepteur (48, 58) d'un système de détermination de position et/ou une caméra (60, 60') et/ou un télémètre.

7. Système selon l'une quelconque des revendications 1 à 6, dans lequel l'unité de commande d'outillage (54) est programmée pour placer l'actionneur (38) après le demi-tour dans une position en miroir par rapport à un plan de symétrie de l'outillage (14) par rapport à la position occupée avant le demi-tour.

8. Système selon l'une quelconque des revendications précédentes, dans lequel l'unité de commande d'outillage (54) est programmée pour mémoriser la position de l'actionneur (38) avant le demi-tour et pour l'extraire après le demi-tour en vue du préréglage de l'actionneur (38) ou pour déterminer la position de l'actionneur (38) à l'aide d'une carte du champ (10).

9. Système selon l'une quelconque des revendications précédentes, dans lequel l'unité de commande d'outillage (54) est programmée pour reconnaître automatiquement un demi-tour.

10. Combinaison d'un véhicule (12), d'un outillage (14) et d'un système selon l'une quelconque des revendications précédentes.
